**Europäisches Patentamt**

**European Patent Office**

**Office européen des brevets**

(11) Publication number:

**0 129 302**
**B1**

## (12) EUROPEAN PATENT SPECIFICATION

(45) Date of publication of patent specification: **07.09.88**

(21) Application number: **84200894.8**

(22) Date of filing: **20.06.84**

(51) Int. Cl.⁴: **A 01 K 45/00**

(54) **A catching apparatus for poultry, in particular for chicks.**

(30) Priority: **20.06.83 NL 8302189**

(43) Date of publication of application:
**27.12.84 Bulletin 84/52**

(45) Publication of the grant of the patent:
**07.09.88 Bulletin 88/36**

(84) Designated Contracting States:
**DE FR GB NL**

(56) References cited:
**GB-A-1 388 613**
**US-A-3 110 388**

(73) Proprietor: **Technisch Bureau Boertien**
**Dorpsstraat 10**
**NL-7916 PC Elim (NL)**

(72) Inventor: **Boertien, Johannes**
**Dorpsstraat 10**
**NL-7916 PC Elim (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The invention relates to a catching apparatus for poultry, in particular for chicks, comprising a circuit for pneumatic transport of the poultry, provided with a tube of a diameter suitable for pneumatic transport of the poultry through the tube, said tube having a catching end, and a delivery end, respectively, for the poultry; a chamber having one or more shoot-off valves to be opened and connected to means for producing an air suction flow in the tube in the direction from the catching end towards the delivery end.

Such an apparatus is known from British patent GB—A—1,388,613. This prior art apparatus has the object to transport the poultry caught therewith in a compartmentalized container arranged on the loading floor of a truck to the eventual destination, mostly the slaughter-house. The supply of the poultry to the compartments in the container takes place pneumatically by means of a transport tube. A system is used wherein the poultry to be transported is caught by sucking the animals into the tube wherein an air suction flow is maintained and by pneumatically transporting these animals directly to the container under the influence of the air flow, delivering them to the respective compartments, to which the tube is detachably coupled.

The compartments, which on the one side are detachably coupled to the tube, are on the other hand connected to a chamber in which a subatmospheric pressure is maintainable by means of, for example, a vacuum pump to which said chamber is also connected and which cause the air suction flow to exist in the tube. The chamber is provided with shut-off valves to be opened which, among others, divide the chamber in separate segments corresponding to the compartments but in cooperation also offer the possibility to produce the said air suction flow in the tube as well as direct air flow for ventilation of the compartments. With the prior art apparatus, however, the speed at which the poultry exits from the tube into the compartments is essentially equal to the transport speed through the tube.

It is an object of the invention to provide an apparatus of the above described type, wherein, however, the animals are loaded not in a container, but in transport boxes having accommodation for a limited number of animals which are transported in that form to the destination, such as the slaughter-house, said boxes being stacked onto each other and arranged on the loading floor of e.g. a truck. In particular, it is an object of the invention to provide an apparatus enabling to supply the animals at a controllable speed, in particular a reduced speed relatively to the transport speed through the tube, to the transport boxes.

The invention is characterized by the features of the second part of claim 1.

Preferably, the shut-off valve(s) of the loading compartment is (are) arranged as stated in dependent claim 2.

In connection with the embodiment indicated in the preceding paragraph, it is furthermore highly advantageous to design the apparatus in such a manner that the tube divides into two branches, the delivery ends thereof terminating each individually in either of two loading compartments, while adjacent the branching point where said tube divides the tube is provided with collapsible direction flaps for guiding the pneumatically supplied poultry to each of the loading compartments. Thus, in spite of charge-wise fill-up of the animals, nevertheless a continuous capture of the animals has become possible.

One embodiment of the apparatus according to the invention will now be described by way of example with reference to the accompanying drawings, in which:

Fig. 1 is a diagrammatic view of the arrangement of the apparatus according to the invention within the entire system of the capture of the animals to be transported, the loading thereof in transport boxes and the supply to and stacking on the loading floor of a truck of the filled up transport boxes;

Fig. 2 more in particular is a top view of an embodiment of the apparatus according to the invention.

In the drawing, 1 represents the catching apparatus with the transport tube 2, which branches at 3, which branches 4, 5 are connected to the loading compartments 6, 7.

At the catching end, 8 represents a flexible forked hose connected to the transport tube 2.

At 9 and 10 are indicated stocks of empty transport boxes for the respective loading compartments 6 and 7 arranged on roller tracks 11, 12. The filled-up transport boxes are transferred alternately from the loading compartments 6, 7 onto conveyor belt 13 and supplied to the truck 14 where the transport boxes are manually taken off and stacked.

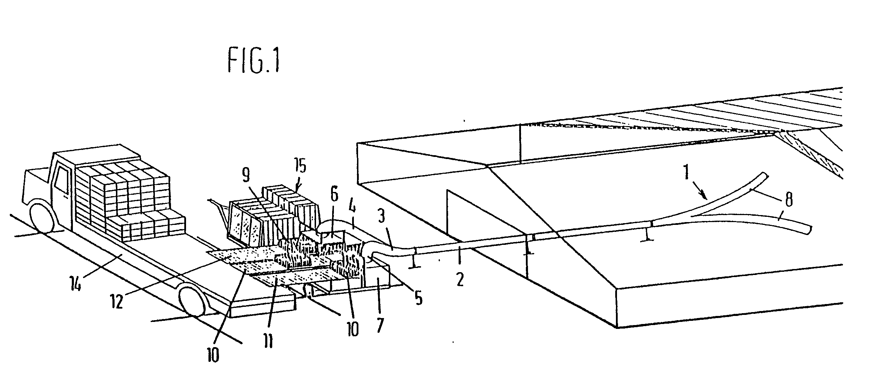

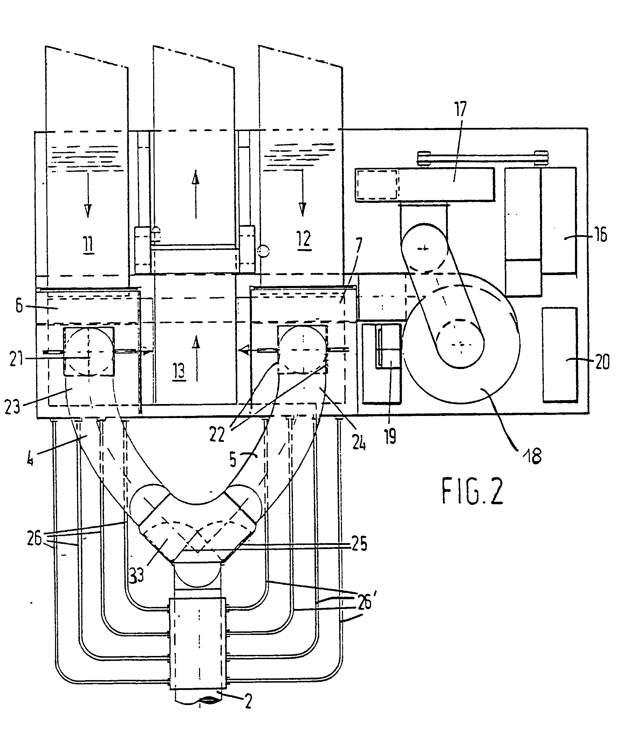

The apparatus required for operating the catching apparatus is shown at 15 in Fig. 1 and comprises (Fig. 2) a Diesel engine 16 with blower 17, a filter 18, a compressor 19 and a meter box with switch desk 20.

The end portions 23, 24 of the transport tube 2, at the delivery end thereof, contain shut-off valves 21, 22 by means of which the supply of the loading compartments can be opened or closed when an empty transport box is arranged in the respective loading compartments for being loaded, or has to be removed from the loading compartments when it is filled. At 25 are indicated direction flaps by means of which the air flow in the transport tube 2 can be conducted to loading compartments 6, 8. Valve 22 is therefore opened.

Finally, 26, 26' indicate a set of conduits which are connected on the one end to the transport tube 2, upstream adjacent the branching point 3 and the other end of which terminates in the loading compartments in a place after the transport box disposed therein. Through said conduits 26, 26' air is withdrawn from the main flow of the air in the tube 2 so that the air flow speed decreases and the animals entrained by the air flow arrive in the transport box at a lower adapted speed. Thus, an average air flow speed maintained in practice for the pneumatic transport of chicks of 30—50 m/sec. can be reduced to a desired speed level of 20—30 m/sec. on supply to the transport box. Naturally, the catching apparatus according to the invention, as discussed in the above and shown in the drawings, can be modified without departing from the scope of the invention.

## Claims

1. A catching apparatus (1) for poultry, in particular for chicks, comprising a circuit for pneumatic transport of the poultry, provided with a tube (2) of a diameter suitable for pneumatic transport of the poultry through the tube (2), said tube containing a catching end (8), and a delivery end (23, 24) respectively, for the poultry; a chamber having one or more shut-off valves (21, 22) to be opened and connected to means (16—20) for producing an air suction flow in the tube (2) in the direction from the catching end (8) towards the delivery end (23, 24), characterized in that the chamber comprises at least one loading compartment (6, 7) in which said delivery end of the tube (2) is disposed and which contains a loading place for loading a poultry transport box in which the pneumatically transported poultry is to be loaded; said catching apparatus (1) being further provided with control means for the air flow speed, comprising one or more bypasses (26, 26'), the one end of which is connected to a tube portion of tube (2) situated upstream of the loading compartment (6, 7) when considering the direction of the air suction flow and the other end terminates in the loading compartment 6, 7 downstream the loading place.

2. An apparatus according to claim 1, characterized in that said shut-off valves (21, 22) of the loading compartments (6, 7) can be opened or closed in connection with transport means (11, 12, 13) for transporting the poultry transport boxes in order to allow the separate supply and discharge, respectively, of the poultry transport boxes to, and from, respectively, the loading compartments (6, 7).

3. An apparatus according to claim 1, characterized in that said tube (2) is closable at said delivery end (23, 24) by said shut-off valve(s) (21, 22) disposed therein.

4. An apparatus according to claims 1—3, characterized in that said tube (2) divides into two branches (4, 5) the two delivery ends (23, 24) thereof terminating each individually in either of two loading compartments (6, 7), while adjacent the branching point (33) where said tube divides the tube (2) is provided with collapsible direction flaps (25) for guiding the pneumatically supplied poultry to each of the loading compartments (6, 7).

## Patentansprüche

1. Fangvorrichtung (1) für Federvieh, insbesondere für Küken, vesehen mit einem Kreis für den pneumatischen Transport des Federviehs durch das Rohr (2) eignet, das ein Fangende (8) bzw. ein Austragsende (23, 24) für das Federvieh aufweist; einer Kammer mit einem oder mehreren zu öffenden Absperventilen (21, 22), die mit Mitteln (16—20) zum Erzeugen eines Luftsaugstromes im Rohr (2) in Richtung vom Fangende (8) zum Austragsende (23, 24) verbunden sind, dadurch gekennzeichnet, dass die Kammer mindestens einen Laderaum (6, 7) aufweist, in dem das Austragsende des Rohres (2) angeordnet ist, und der einen Ladeplatz zum Beladen eines Transportbehälters für Federvieh enthält, der mit dem pneumatisch transportierten Federvieh zu beladen ist; dass die Fangvorrichtung (1) weiter mit Steuermitteln für die Luftströmungsgeschwindigkeit versehen ist, die eine oder mehrere Umlaufleitungen (26, 26') aufweisen, deren eines Ende mit einem Rohrteil des Rohres (2) verbunden ist, der sich stromaufwärts des Laderaumes (6, 7) befindet, gesehen in Richtung des Luftsaugstromes, und deren anderes Ende stromabwärts des Ladeplatzes in dem Laderaum (6, 7) endet.

2. Vorrichtung nach Anspruch 1, dadurch gekennzeichnet, dass das bzw. die Absperrventil(e) (21, 22) des Laderaumes (6, 7) in Verbindung mit Transportmitteln (11, 12, 13) zum Transportieren der Transportbehälter für Federvieh geöffnet oder geschlossen werden kann bzw. können, um die separate Zu- bzw. Abfuhr der Transportbehälter für Federvieh zu bzw. aus dem Laderaum (6, 7) zu ermöglichen.

3. Vorrichtung nach Anspruch 1, dadurch gekennzeichnet, dass das Rohr (2) am Austragsende (23, 24) durch das bzw. die darin angeordnete(n) Absperrventil(e) (21, 22) geschlossen werden kann.

4. Vorrichtung nach Ansprüchen 1 bis 3, dadurch gekennzeichnet, dass das Rohr (2) sich in zwei Zweige (4, 5) teilt, deren zwei Austragsenden (23, 24) je einzeln in einem der beiden Laderäume (6, 7) enden, wobei nahe dem Abzweigpunkt (33), wo das Rohr sich teilt, das Rohr (2) mit Richtungsklappen (25) versehen ist, mit denen das pneumatisch zugeführte Federvieh jedem dere Laderäume (6, 7) zugeleitet wird.

## Revendications

1. Un appareil de captage (1) pour volaille, en particulier pour poulets, comprenant un circuit pour transport pneumatique de la volaille, ayant un tube (2) d'un diamètre propice au transport pneumatique de la volaille à travers le tube (2), ledit tube contenant une extrémité de captage (8) et une extrémité de décharge (23, 24), respectivement, pour la volaille; une chambre ayant un ou plusieurs clapets de fermeture (21, 22) à ouvrir et raccordés à des moyens (16—20) pour produire un courant d'aspiration d'air dans le tube (2) dans la direction de l'extrémité de captage (8) vers l'extrémité de décharge (23, 24), caractérisé en ce que la chambre comprend au moins un compartiment de chargement (6, 7) dans lequel ladite extrémité de décharge du tube (2) est présente et qui contient une place de chargement pour charger une boîte de transport de volaille dans laquelle la volaille transportée pneumatiquement devra être chargée, ledit appareil de captage (1) étant également muni de moyens de contrôle pour la vitesse du courant d'air, comprenant des conduits de dérivation (26, 26'), dont l'une extrémité est raccordée à une portion du tube (2) située en amont du compartiment de chargement (6, 7) vue en direction du courant d'aspiration d'air, et l'autre extrémité se terminant au compartiment de chargement (6, 7) en aval de place de chargement.

2. Un appareil selon la revendication 1, caractérisé en ce que lesdits clapets de fermeture (21, 22) du compartiment de chargement (6, 7) peuvent être ouverts ou fermés en rapport avec des moyens de transport (11, 12, 13) pour transporter les boîtes de transport de volaille, afin de permettre l'alimentation et la décharge, respectivement, des boîtes de transport de volaille vers et à partir, respectivement, du compartiment de chargement (6, 7).

3. Un appareil selon la revendication 1, caractérisé en ce que ledit tube (2) est ferment à ladite extrémité de decharge (23, 24) par lesdits clapets de fermeture (21, 22) installés là-dedans.

4. Un appareil selon les revendications 1—3, caractérisé en ce que ledit tube (2) se divise en deux branchements (4, 5), dont les deux extrémités de décharge (23, 24) se terminent chacune individuellement dans l'un quelconque de deux compartiments de chargement (6, 7), alors que près du point de branchement (33) où ledit tube se divise, le tube (2) est muni de rabats de direction pliables (25) pour guider la volaille amenée pneumatiquement vers chacun des compartiments de chargement (6, 7).

FIG.1

FIG.2